# EUROPEAN PATENT SPECIFICATION

(11) **EP 0 562 410 B1**
(45) Date of publication and mention of the grant of the patent: **28.05.1997**
(21) Application number: 93104202.2
(22) Date of filing: 16.03.1993
(51) Int. Cl.: G04G 5/00, H04H 1/00, G04G 7/02, G04G 9/00

(54) **Method and apparatus for synchronizing a real time clock**
Verfahren und Gerät zur Synchronisierung von Echtzeituhren
Procédé et appareil pour la synchronisation d'une horloge en temps réel

(30) Priority: 25.03.1992 EP 92400812
(43) Date of publication of application: 29.09.1993
(73) Proprietor: THOMSON multimedia, 92400 Courbevoie (FR)
(72) Inventor: Diehl, Eric, F-67100 Strasbourg (FR); Hamon, Joel, F-67640 Lipsheim (FR)
(74) Representative: Hartnack, Wolfgang, Dipl.-Ing.

(56) References cited:
- EP-A- 0 355 567
- DE-A- 2 530 985
- DE-A- 4 036 851

## Description

The present invention relates to a method and to an apparatus for synchronizing a real time clock.

### Background

Currently today, the vertical blanking interval lines of TV signals are used to carry digital information, e.g. teletext. One part of this information can be the current real time. Often consumer products are equipped with a real time clock which is linked to a microcontroller driving the complete device, e.g. a VCR. This allows to perform some programming tasks.
But this real time clock needs a power supply in order to work. In case of power failure, it loses the time unless it is backed up by an expensive accumulator or a battery.

In DE-A-4 036 851 it is disclosed a RDS-receiver for a car. The RDS-receiver is burglar-protected by a quick-out mechanism. When the RDS-receiver is put back into the quick-out mechanism and is switched on again in normal operation mode, the RDS-receiver evaluates a data stream of an RDS-programme and sets its real time clock automatically.

In DE-A-2 530 985 it is disclosed an electronic calculator, which comprises a receiver for time signals transmitted by the "Physikalisch-Technische Bundesanstalt" in coded form.

In EP-A-0 355 567 it is disclosed a method for correction of date and time in a consumer electronic device comprising a real time clock. Time data resulting from a video text decoder and from the real time clock are compared continuously. The real time clock is set based on the received time data from the video text decoder when a difference is detected.

### Invention

It is one object of the invention to disclose a method of operating a real time clock which does not need such an accumulator or battery for backup and which is capable of setting its real time clock automatically after an occurred power failure. This object is achieved by the method disclosed in claim 1.

A central microcontroller drives a real time clock and the standby function of a power supply. A data extractor receives a signal containing the real time, e.g. a video signal, and extracts the expected data related to the real time and transfers this data to the microcontroller. The microcontroller sets the clock after preselected time periods, e.g. once per day, and after switching on the whole apparatus, e.g. a TV set or a VCR or a radio. The microcontroller and the real time clock only have to be supplied in stand by mode.

In principle the inventive method consists in a kind of synchronizing a real time clock, whereby the power supply of said clock and of a microcontroller being able to set said clock can be switched off and can be switched to a standby mode and can be switched to a normal operation mode by a user and whereby in said normal operation mode time related data are extracted from a broadcasted signal and fed to said microcontroller, which sets said clock automatically after switching on said power supply using said time related data, whereby said clock is also set automatically before switching in said standby mode from said switched-off mode by switching intermediately to said normal operation mode.

Advantageous additional embodiments of the inventive method are resulting from the respective dependent claims.

It is a further object of the invention to disclose an apparatus which utilizes the inventive method. This object is reached by the apparatus disclosed in claim 8.

In principle the inventive apparatus comprises a real time clock, whereby the power supply of said clock and of a microcontroller being able to set said clock can be switched off and can be switched to a standby mode and can be switched to a normal operation mode by a user and whereby in said normal operation mode time related data are extracted in extractor means from a broadcasted signal and fed to said microcontroller, which sets said clock automatically after switching on said power supply using said time related data, whereby said clock is also set automatically before switching in said standby mode from said switched-off mode by switching intermediately to said normal operation mode.

### Drawing

Preferred embodiments of the invention are described with reference to the accompanying drawing:

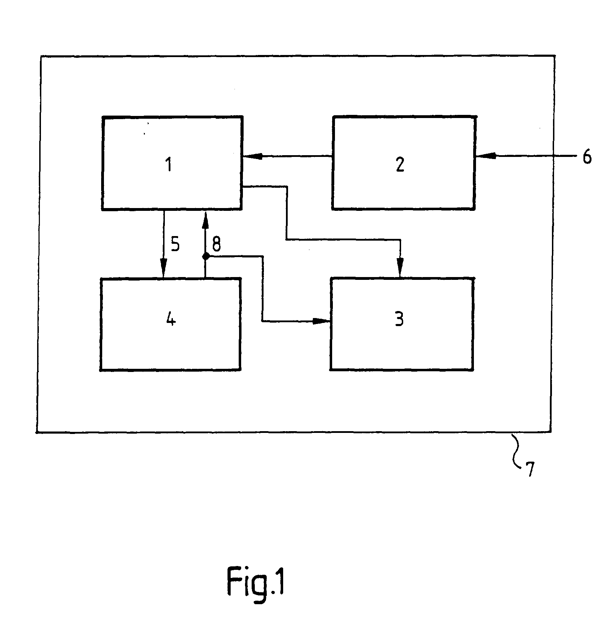

- Fig. 1: shows the inventive apparatus.

### Preferred embodiments

In Fig. 1 the inventive apparatus 7 comprises a central microcontroller 1 driving a power supply circuit 4 and a real time clock 3. In a standby mode the power supply unit 4 supplies microcontroller 1 and real time clock 3 via line 8. A data extractor circuit 2 receives at input 6 a signal containing the real time, e.g. the teletext information of a video signal or pay TV related data or RDS (radio data system) information, and extracts the expected time related data and transfers it to microcontroller 1. The power supply circuit can be switched between normal operation mode and standby mode by the microcontroller using a standby command on line 5.

Three main operation phases can be distinguished.
- Initialisation:: The real time clock 3 is not set because the power supply was totally switched off. In this case, when powering on the apparatus 7, it will not be switched to stand by mode (as is currently done with consumer products). But the microcontroller keeps awake the appliance as long as the data extractor circuit 2 has not extracted the current time. Then the microcontroller sets the real time clock 3 to the correct time. After that a switching to standby mode is enabled, i.e. when a user requests to switch off the apparatus 7 the microcontroller will validate the command only, if the real time clock has been set.
- Normal operation:: Once awaked, the microcontroller checks on a regular base (e.g. once per hour or at midnight or when another channel is selected or when the apparatus 7 is switched from standby mode to normal operation mode) the equality between the time of the real time clock 3 and the time carried by the signal at input 6. In case of a difference, the microcontroller automatically adjusts the real time clock. This avoids a time drift and gains an automatic switching between winter and summer time.
- Power failure:: After a power failure the microcontroller will switch apparatus 7 to standby mode only after the current time has been extracted and the real time clock 3 has been set. After the power failure no action is required from a user.

Advantageously in case that apparatus 7 is able to tune to the time information of different channels, the microcontroller can automatically and intermediately select a channel which contains the current time, if the current channel carries no time information. In case of initialisation the microcontroller may scan the complete frequency range in order to find such a channel.

The feature of automatic clock setting and time displaying can be extended to the current date.

The user has never to worry about setting the current time. The user interface is simplified.
The manufacturer does not need to protect the real time clock supply with a big capacitor or an accumulator or a battery, which all are expensive solutions.

## Claims

1. Method for synchronizing a real time clock (3), wherein a power supply (4) of said clock (3) and of a microcontroller (1), being able to set said clock (3), can be switched to a switch-off mode and a normal operation mode by a user, and wherein in said normal operation mode time related data are extracted (2) from a broadcasted signal and fed to said microcontroller (1), which sets said clock (3) automatically after switching on said power supply (4) to normal operation mode using said time related data, **characterised in that** a standby mode is provided for the power supply (4) and that after switching said power supply (4) from switch-off mode to standby mode, said clock (3) is set automatically before switching in said standby mode by switching intermediately to said normal operation mode.

2. Method for synchronizing a real time clock (3), wherein a power supply (4) of said clock (3) and of a microcontroller (1), being able to set said clock (3), can be switched to a normal operation mode and wherein in said normal operation mode time related data are extracted (2) from a broadcasted signal and fed to said microcontroller (1), which sets said clock (3) automatically after switching on said power supply (4) to normal operation mode using said time related data, **characterised in that** a standby mode is provided for the power supply (4) and that said microcontroller (1) sets said clock (3) when switching from standby mode to normal operation mode.

3. Method according to claim 1 or 2, **wherein** said broadcasted signal is a TV signal carrying teletext information or a pay TV signal or a RDS signal.

4. Method according to claims 1 to 3, **wherein** in said normal operation mode said microcontroller (1) sets said clock (3) regularly or when another broadcasted channel is selected.

5. Method according to claim 1, 3 or 4, **wherein** said microcontroller (1) sets said clock (3) when switching from standby mode to normal operation mode.

6. Method according to any of claims 1 to 5, **wherein** said microcontroller (1) automatically and intermediately selects a channel which contains the current time, if the current channel carries no time information.

7. Method according to claim 6, **wherein** said microcontroller (1) scans a complete standard frequency range in order to find such a channel carrying time information.

8. Method according to any of claims 1 to 7, **wherein** said clock setting and a respective time displaying is extended to the current date.

9. Apparatus for a method according to any of claims 1, 3 to 7, comprising a real time clock (3), wherein the power supply (4) of said clock (3) and of a microcontroller (1), being able to set said clock (3), can be switched off and can be switched to a normal operation mode by a user and whereby in said normal operation mode time related data are extracted in extractor means (2) from a broadcasted signal and fed to said microcontroller (1), which sets said clock (3) automatically after switching on said power supply (4) in normal operation mode using said time related data, **characterised in that** a standby mode is provided for the power supply (4) and that it comprises means for setting automatically before switching in said standby mode said real time clock (3) by switching intermediately to said normal operation mode, after said power supply (4) is switched from switch-off mode to standby mode.

## Patentansprüche

1. Verfahren zum Synchronisieren einer Echtzeituhr (3), worin eine Stromversorgung (4) der Uhr (3) und eines Mikrocontrollers (1), der die Uhr (3) einstellen kann, in einen ausgeschalteten Zustand und einen normalen Betriebszustand von einem Benutzer geschaltet werden kann, und worin in dem normalen Betriebszustand zeitbezogene Daten aus einem ausgestrahlen Signal extrahiert (2) und dem Mikrocontroller (1) zugeführt werden, der die Uhr (3) automatisch nach dem Einschalten der Stromversorgung (4) in den normalen Betriebszustand unter Verwendung der zeitbezogenen Daten einstellt, **dadurch gekennzeichnet,** daß ein Bereitschaftszustand für die Stromversorgung (4) vorgesehen ist, und daß nach dem Umschalten der Stromversorgung (4) von dem Aus-Zustand in den Bereitschaftszustand die Uhr (3) automatisch vor dem Schalten in den Bereitschaftszustand durch ein dazwischenliegendes Schalten in den normalen Betriebszustand eingestellt wird.

2. Verfahren zum Synchronisieren einer Echtzeituhr (3), worin eine Stromversorgung (4) der Uhr (3) und eines Mikrocontrollers (1), der die Uhr (3) einstellen kann, in einen normalen Betriebszustand geschaltet werden kann, und worin in dem normalen Betriebszustand zeitbezogene Daten von einem ausgestrahlten Signal extrahiert (2) und dem Mikrocontroller (1) zugeführt werden, der die Uhr (3) automatisch nach dem Einschalten der Stromversorgung (4) in den normalen Betriebszustand unter Verwendung der zeitbezogenen Daten einstellt, **dadurch gekennzeichnet,** daß ein Bereitschaftszustand für die Stromversorgung (4) geschaffen ist, und daß der Mikrocontroller (1) die Uhr (3) beim Einschalten von dem Bereitschaftszustand in den normalen Betriebszustand einstellt.

3. Verfahren nach einem der Ansprüche 1 oder 2, **worin** das ausgestrahlte Signal ein Fernsehsignal ist, das Teletextinformation überträgt, oder ein Abonnentenfernsehsignal oder ein RDS-Signal ist.

4. Verfahren nach einem der Ansprüche 1 bis 3, **worin** in dem normalen Betriebszustand der Mikrocontroller (1) die Uhr (3) in regulären Abständen oder bei der Auswahl eines anderen ausgestrahlten Kanals einstellt.

5. Verfahren nach Anspruch 1, 3 oder 4, **worin** der Mikrocontroller (1) die Uhr (3) beim Schalten von dem Bereitschaftszustand in den normalen Betriebszustand einstellt.

6. Verfahren nach einem der Ansprüche 1 bis 5, **worin** der Mikrocontroller (1) automatisch und zwischenzeitlich einen Kanal auswählt, der die gegenwärtige Zeit enthält, falls der gegenwärtige Kanal keine Zeitinformation überträgt.

7. Verfahren nach Anspruch 6, **worin** der Mikrocontroller (1) einen kompletten Standardfrequenzbereich scannt, um einen solchen Kanal zu finden, der Zeitinformation überträgt.

8. Verfahren nach einem der Ansprüche 1 bis 7, worin die Uhreinstellung und eine entsprechende Zeitanzeige auf das gegenwärtige Datum erweitert ist.

9. Vorrichtung zur Durchführung eines Verfahrens nach einem der Ansprüche 1, 3 - 7, mit einer Echtzeituhr (3), worin die Stromversorgung (4) der Uhr (3) und eines Mikrocontrollers (1), der die Uhr (3) einstellen kann, ausgeschaltet werden kann und in einen normalen Betriebszustand von einem Benutzer geschaltet werden kann, und worin in dem normalen Betriebszustand zeitbezogene Daten in einem Maskenmittel (2) aus einem ausgestrahlten Signal extrahiert und dem Mikrocontroller (1) zugeführt werden, der die Uhr (3) automatisch nach dem Einschalten der Stromversorgung (4) in den normalen Betriebszustand unter Verwendung der zeitbezogenen Daten einstellt, **dadurch gekennzeichnet,** daß ein Bereitschaftszustand für die Stromversorgung (4) vorgesehen ist, und daß sie ein Mittel zum automatischen Einstellen der Echtzeituhr (3) vor dem Schalten in den Bereitschaftszustand durch das dazwischenliegende Schalten in den normalen Betriebszustand aufweist, nachdem die Stromversorgung vom ausgeschalteten Zustand in den Bereitschaftszustand geschaltet ist.

## Revendications

1. Procédé pour la synchronisation d'une horloge en temps réel (3), dans lequel une alimentation (4) de ladite horloge (3) et d'un microcontrôleur (1), étant capable de régler ladite horloge (3), peut être commutée sur un mode d'arrêt et un mode de fonctionnement normal par un utilisateur, et dans lequel dans ledit mode de fonctionnement normal des données relatives à l'heure sont extraites (2) d'un signal diffusé et passées audit microcontrôleur (1), lequel règle ladite horloge (3) automatiquement après avoir mis en marche ladite alimentation (4) en mode de fonctionnement normal en utilisant lesdites données relatives à l'heure, caractérisé en ce qu'un mode de veille est fourni pour l'alimentation (4) et qu'après avoir commuté ladite alimentation (4) à partir du mode d'arrêt sur le mode de veille, ladite horloge (3) est réglée automatiquement avant la commutation sur ledit mode de veille en commutant entre-temps sur ledit mode de fonctionnement normal.

2. Procédé pour la synchronisation d'une horloge en temps réel (3), dans lequel une alimentation (4) de ladite horloge (3) et d'un microcontrôleur (1), étant capable de régler ladite horloge (3), peut être commutée sur un mode de fonctionnement normal et dans lequel dans ledit mode de fonctionnement normal des données relatives à l'heure sont extraites (2) d'un signal diffusé et passées audit microcontrôleur (1), lequel règle ladite horloge (3) automatiquement après avoir mis en marche ladite alimentation (4) en mode de fonctionnement normal en utilisant lesdites données relatives à l'heure, caractérisé en ce qu'un mode de veille est fourni pour l'alimentation (4) et que ledit microcontrôleur (1) règle ladite horloge (3) lors de la commutation à partir du mode de veille sur le mode de fonctionnement normal.

3. Procédé conformément à la revendication 1 ou 2, dans lequel ledit signal diffusé est un signal de télévision portant des informations de télétexte ou un signal de télévision payante ou un signal RDS.

4. Procédé conformément aux revendications 1 à 3, dans lequel dans ledit mode de fonctionnement normal ledit microcontrôleur (1) règle ladite horloge (3) régulièrement ou quand une autre chaîne diffusée est sélectionnée.

5. Procédé conformément à la revendication 1, 3 ou 4, dans lequel ledit microcontrôleur (1) règle ladite horloge (3) lors de la commutation à partir du mode de veille sur le mode de fonctionnement normal.

6. Procédé conformément à l'une quelconque des revendications 1 à 5, dans lequel ledit microcontrôleur (1) sélectionne automatiquement et entre-temps une chaîne qui contient l'heure en cours, si la chaîne en cours ne porte pas d'informations d'heure.

7. Procédé conformément à la revendication 6, dans lequel ledit microcontrôleur (1) balaye toute une gamme de fréquences standard afin de trouver une telle chaîne portant des informations d'heure.

8. Procédé conformément à l'une quelconque des revendications 1 à 7, dans lequel ledit réglage d'horloge et un affichage de temps respectif sont étendus à la date en cours.

9. Appareil pour un procédé conformément à l'une quelconque des revendications 1, 3 à 7, comprenant une horloge en temps réel (3), dans lequel l'alimentation (4) de ladite horloge (3) et d'un microcontrôleur (1), étant capable de régler ladite horloge (3), peut être arrêtée et peut être commutée sur un mode de fonctionnement normal par un utilisateur et par lequel dans ledit mode de fonctionnement normal des données relatives à l'heure sont extraites dans un moyen d'extraction (2) à partir d'un signal diffusé et passées audit microcontrôleur (1), lequel règle ladite horloge (3) automatiquement après avoir mis en marche ladite alimentation (4) en mode de fonctionnement normal en utilisant lesdites données relatives à l'heure, caractérisé en ce qu'un mode de veille est fourni pour l'alimentation (4) et qu'il comprend un moyen pour régler automatiquement avant la commutation sur ledit mode de veille ladite horloge en temps réel (3) en commutant entre-temps sur ledit mode de fonctionnement normal, après que ladite alimentation (4) ait été commutée à partir du mode d'arrêt sur le mode de veille.
